# EUROPÄISCHE PATENTSCHRIFT

(11) **EP 1 526 985 B1**
(45) Veröffentlichungstag und Bekanntmachung des Hinweises auf die Patenterteilung: **23.01.2008**
(21) Anmeldenummer: 03706284.1
(22) Anmeldetag: 06.02.2003
(51) Int. Cl.: B60R 16/02

(54) **VERFAHREN UND VORRICHTUNG ZUR SIGNALISIERUNG EINER FÜR DEN BETRIEB EINES KRAFTAHRZEUGS RELEVANTEN INFORMATION**
METHOD AND DEVICE FOR SIGNALLING OF RELEVANT INFORMATION FOR THE OPERATION OF A MOTOR VEHICLE
PROCEDE ET DISPOSITIF POUR SIGNALISER DES INFORMATIONS RELATIVES AU FONCTIONNEMENT D'UN VEHICULE AUTOMOBILE

(30) Priorität: 01.08.2002 DE 10235165
(43) Veröffentlichungstag der Anmeldung: 04.05.2005
(73) Patentinhaber: ROBERT BOSCH GMBH, 70442 Stuttgart (DE)
(72) Erfinder: GRILL, Michael, 70563 Stuttgart (DE); KUSTOSCH, Mario, 71665 Vaihingen/Enz (DE)
(86) Internationale Anmeldenummer: PCT/DE2003/000330
(87) Internationale Veröffentlichungsnummer: WO 2004/016471

(56) Entgegenhaltungen:
- EP-A- 0 633 155
- DE-A- 3 232 160

## Beschreibung

### Stand der Technik

Die Erfindung geht von einem Verfahren und von einer Vorrichtung zur Signalisierung einer für den Betrieb eines Kraftfahrzeugs relevanten Informationen nach der Gattung der unabhängigen Ansprüche aus, wie sie aus DE-A-3232160 bekannt sind.

Verfahren und Vorrichtungen zur Signalisierung einer für den Betrieb eines Kraftfahrzeugs relevanten Information sind bereits bekannt. Dabei ist beispielsweise eine optische Verbrauchsanzeige in vielen Fahrzeugen standardmäßig vorgesehen und fördert das Bewusstsein für eine ökonomische Fahrweise. Die optische Verbrauchsanzeige gibt dabei den aktuellen Kraftstoffverbrauchswert wieder. Auf diese Weise lassen sich verschiedene Kraftstoffverbrauchswerte optisch an der Verbrauchsanzeige wiedergeben.

Ein großes Potential zur Kraftstoffersparnis liegt in der Fahrweise des Autofahrers. Den meisten Autofahrern sind die physikalischen Ursachen für einen hohen Verbrauch nicht bewusst oder es fehlen Informationen, die für eine optimale Fahrweise notwendig sind, zum Beispiel der aktuelle Wirkungsgrad des Motors.

### Vorteile der Erfindung

Das erfindungsgemäße Verfahren und die erfindungsgemäße Vorrichtung zur Signalisierung mit den Merkmalen der unabhängigen Ansprüche haben demgegenüber den Vorteil, dass die für den Betrieb des Kraftfahrzeugs relevante Information durch einen Betriebspunkt einer Antriebseinheit des Fahrzeugs gebildet wird und dass in Abhängigkeit des Betriebspunktes eine haptische Signalisierung an einem Bedienelement des Fahrzeugs, insbesondere einem Fahrpedal, gebildet wird. Auf diese Weise kann dem Fahrer eine Information über eine kraftstoffverbrauchsminimale Fahrweise übermittelt werden. Die haptische Signalisierung am Bedienelement hat außerdem den Vorteil, dass der Fahrer den Blick nicht von der Fahrbahn nehmen muss. Er wird somit nicht vom Verkehrsgeschehen abgelenkt. Die haptische Signalisierung stellt daher kein Sicherheitsrisiko dar und erhöht das Unfallrisiko nicht. Handelt es sich bei dem Bedienelement um ein Bedienelement, das ständig vom Fahrer betätigt wird, beispielsweise dem Fahrpedal, so wird außerdem sichergestellt, dass der Fahrer die Information über den Betriebspunkt der Antriebseinheit ständig wahrnehmen kann. Handelt es sich bei dem Bedienelement um das Fahrpedal, so kann die haptische Signalisierung des Betriebspunktes der Antriebseinheit den Fahrer über das Fahrpedal direkt zu einer kraftstoffverbrauchsreduzierenden Fahrweise durch Veränderung der Fahrpedalstellung und damit Veränderung der haptische Signalisierung veranlassen.

Durch die haptische Signalisierung wird ein optimaler Betriebspunkt der Antriebseinheit, insbesondere ein optimaler Motorwirkungsgrad, wiedergegeben. Auf diese Weise wird dem Fahrer die Möglichkeit gegeben, mit optimalem Motorwirkungsgrad bzw. optimalem Betriebspunkt der Antriebseinheit und damit kraftstoffverbrauchsminimal zu fahren oder zu beschleunigen. Durch die in den Unteransprüchen aufgeführten Maßnahmen sind vorteilhafte Weiterbildungen und Verbesserungen des im Hauptanspruch angegebenen Verfahrens möglich.

Besonders vorteilhaft dabei ist es, wenn die haptische Signalisierung etwa bei Erreichen des optimalen Betriebspunktes einsetzt. Auf diese Weise kann der Fahrer seine Fahrweise sehr präzise an den optimalen Betriebspunkt der Antriebseinheit anpassen und somit kraftstoffverbrauchsminimal sein Fahrzeug betreiben. Ist das Bedienelement als Fahrpedal ausgebildet, so kann der Fahrer die Information über den optimalen Betriebspunkt direkt auf seine Fahrweise umsetzen, indem er ständig im Bereich der einsetzenden haptischen Signalisierung am Fahrpedal fährt.

Besonders vorteilhaft ist es, wenn die haptische Signalisierung durch eine am Bedienelement wirkende Rückstellkraft gebildet wird. Auf diese Weise wird sicher gestellt, dass die haptische Signalisierung bei der Betätigung des Bedienelementes vom Fahrer auch wahrgenommen wird. Außerdem wird für den Fahrer das Fahren mit optimalem Betriebspunkt der Antriebseinheit auf diese Weise erleichtert, wenn zusätzlich das Bedienelement als Fahrpedal ausgebildet ist. Die mit Erreichen des optimalen Betriebspunktes einsetzende Rückstellkraft erleichtert es dem Fahrer, den optimalen Betriebspunkt der Antriebseinheit bei der Betätigung des Fahrpedals zu halten.

### Zeichnung

Ein Ausführungsbeispiel der Erfindung ist in der Zeichnung dargestellt und in der nachfolgenden Beschreibung näher erläutert.

Es zeigen
- Figur 1: ein Blockschaltbild mit einer erfindungsgemäßen Vorrichtung,
- Figur 2: ein Kennfeld zur Ermittlung eines spezifischen Kraftstoffverbrauchs des Kraftfahrzeugs,
- Figur 3: ein Kennfeld zur Ermittlung einer Rückstellkraft für ein Fahrpedal des Fahrzeugs und
- Figur 4: ein Funktionsdiagramm zur Verdeutlichung der Funktionsweise der erfindungsgemäßen Vorrichtung und des erfindungsgemäßen Verfahrens.

### Beschreibung der Ausführungsbeispiele

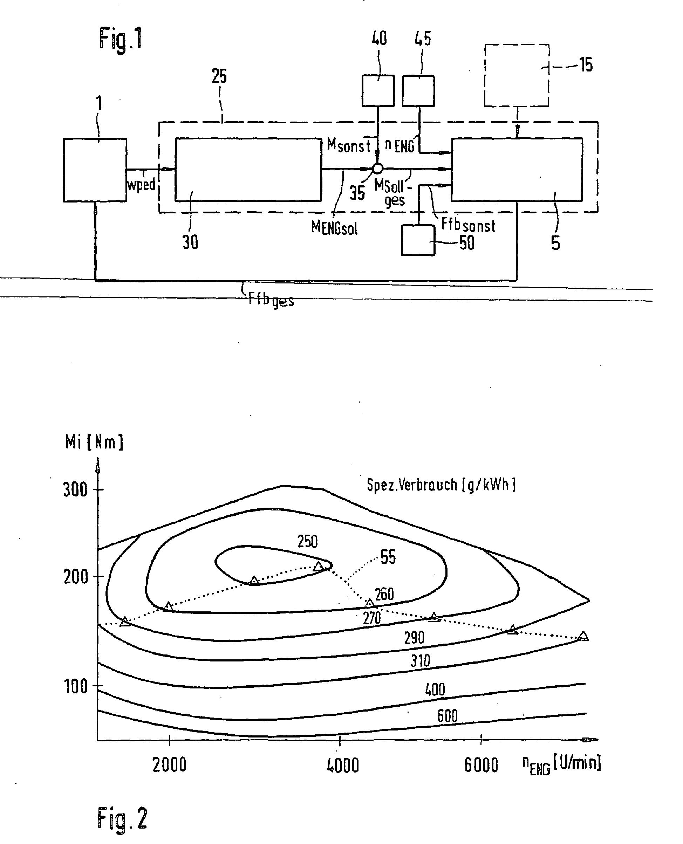

In Figur 1 kennzeichnet 25 eine Steuerung eines Kraftfahrzeugs mit einer Antriebseinheit, die beispielsweise einen Otto-Motor, einen Dieselmotor, einen Elektromotor oder dergleichen umfasst, oder auf einem beliebigen, dazu alternativen Antriebskonzept basiert. Das Fahrzeug umfasst weiterhin ein Bedienelement 1, das beispielsweise als Fahrpedal ausgebildet ist. Die Steuerung 25 umfasst eine Fahrerwunschinterpretationseinheit 30, die mit dem Fahrpedal 1 verbunden ist. Aus der Stellung wped des vom Fahrer betätigten Fahrpedals 1 ermittelt die Fahrerwunschinterpretationseinheit 30 einen Sollwert für eine Ausgangsgröße der Antriebseinheit. Bei dieser Ausgangsgröße kann es sich beispielsweise um ein Motorausgangsmoment oder um ein Radausgangsmoment oder eine Ausgangsleistung oder eine von den genannten Größen ableitbare Ausgangsgröße handeln. Im Folgenden soll beispielhaft angenommen werden, dass es sich bei der Ausgangsgröße der Antriebseinheit um ein Motorausgangsmoment handelt. Die Fahrerwunschinterpretationseinheit 30 bildet somit aus der Stellung wped des Fahrpedals 1 in dem Fachmann bekannter Weise einen Sollwert M_{ENGsoll} für das Motorausgangsmoment der Antriebseinheit. Der so abhängig vom Fahrerwunsch gebildete Sollwert M_{ENGsoll} wird einem ersten Additionsglied 35 zugeführt und dort mit einer resultierenden Momentenanforderung Mₛₒₙₛₜ addiert, die von einem Koordinator 40 in Abhängigkeit der übrigen Drehmomentanforderungen gebildet wird. Die übrigen Drehmomentenanforderungen können beispielsweise zur Kompensation des Momentenbedarfs von Nebenaggregaten des Fahrzeugs, wie beispielsweise einer Klimaanlage, eines Autoradios oder eines Servomotors, herrühren oder von einer Leerlaufregelung. Die Koordination dieser übrigen Drehmomentanforderungen im Koordinator 40 erfolgt dabei ebenfalls in dem Fachmann bekannter Weise. Die vom ersten Additionsglied 35 gebildete Summe ist ein resultierender Gesamtsollwert M_{sollges} der einer erfindungsgemäßen Vorrichtung 5 zugeführt wird. Die Vorrichtung 5 dient zur haptische Signalisierung am Bedienelement 1, also in diesem Beispiel am Fahrpedal 1. Diese haptische Signalisierung kann beispielsweise durch Erzeugung einer geeigneten Rückstellkraft am Fahrpedal 1 erfolgen. In der Vorrichtung 5 ist von einem Drehzahlsensor 45 eine aktuelle Drehzahl n_{ENG} eines die Antriebseinheit antreibenden Motors zugeführt, der wie beschrieben beispielsweise ein Otto-Motor, ein Dieselmotor oder ein Elektromotor sein kann. Weiterhin kann optional ein Koordinator 50 für sonstige Rückstellkraftanforderungen an das Fahrpedal 1 vorgesehen sein, der für diese sonstigen Rückstellkraftanforderungen eine resultierende Rückstellkraftanforderung Ffbsonst bildet. Dies könnte z.B. eine haptische Rückmeldung zur Einhaltung eines Sicherheitsabstands sein. Die resultierende Rückstellkraftanforderung Ffbsonst wird ebenfalls der Vorrichtung 5 zugeführt. Optional kann außerdem eine Eingabeeinheit 15, wie in Figur 1 gestrichelt dargestellt, vorgesehen sein. An der Eingabeeinheit 15 kann der Fahrer beispielsweise einen oder mehrere Kraftstoffverbrauchswerte vorgeben. Diese werden ebenfalls der Vorrichtung 5 zugeführt. Gemäß Figur 1 umfasst die Steuerung 25 die Fahrerwunschinterpretationseinheit 30, das erste Additionsglied 35 und die Vorrichtung 5. Die Steuerung 25 kann beispielsweise hardware- und/oder softwaremäßig implementiert sein, wobei die Software von einem Mikrochip abgearbeitet werden kann.

Die Vorrichtung 5 ermittelt aus den zugeführten Eingangsgrößen eine resultierende Gesamtrückstellungskraft Ffbges und steuert das Fahrpedal 1 zur Einstellung dieser resultierenden Gesamtrückstellungskraft Ffbges an. Dies kann in dem Fachmann bekannter Weise mittels eines in Figur 1 nicht dargestellten von der Vorrichtung 5 elektronisch angesteuerten Aktuators zur Einstellung einer gegen die Betätigungsrichtung des Fahrpedals 1 wirkenden Federkraft realisiert werden.

Für die folgenden Betrachtungen soll beispielhaft angenommen werden, dass das Fahrzeug von einem Verbrennungsmotor, also beispielsweise einem Otto-Motor oder einem Dieselmotor, angetrieben wird. Die Betrachtungen gelten jedoch allgemein für den Energieverbrauch des Fahrzeugs. Während eines Beschleunigungsvorgangs entspricht der Kraftstoffverbrauch der Leistung, die zur Überwindung der Massenträgheit des Fahrzeugs benötigt wird. Der Kraftstoffverbrauch während des Beschleunigungsvorgangs kann minimiert werden, indem der Motor durch eine definierte Fahrpedalstellung vom Fahrer im günstigsten Betriebspunkt gehalten wird, diese Fahrpedalstellung soll dem Fahrer erfindungsgemäß durch ein haptisches Signal am Fahrpedal 1 angezeigt werden.

Figur 2 zeigt ein sogenanntes Muschelkennfeld eines Verbrennungsmotors, bei dem das Ausgangsmoment des Motors, das sogenannte indizierte Moment Mi in Nm über der Motordrehzahl n_{ENG} in U/min aufgetragen ist. Das indizierte Moment Mi und die Motordrehzahl n_{ENG} spannen dabei ein Kennfeld für einen spezifischen Kraftstoffverbrauch des Fahrzeugs in g/kWh auf, indem Isolinien für diesen spezifischen Kraftstoffverbrauch in der genannten Einheit dargestellt sind. Das Kennfeld kann auf einem Motorenprüfstand ermittelt werden, indem unter Vorgabe der Motordrehzahl n_{ENG} und der Last, die beispielsweise durch eine mit der Kurbelwelle des Motors verbundene Wirbelstrombremse realisiert wird, das Verhältnis aus verbrauchter Kraftstoffmenge und verrichteter mechanischer Arbeit an der Kurbelwelle ermittelt wird. Dieses Verhältnis wird mit Be bezeichnet. Das Verhältnis Be ist der spezifische Kraftstoffverbrauch. Der spezifische Kraftstoffverbrauch Be wird dann gemäß Figur 2 über der Motordrehzahl und dem indizierten Moment Mi aufgetragen, das die durch die Wirbelstrombremse variierte Last in dem Fachmann bekannter Weise repräsentiert. Dabei kann das indizierte Moment Mi als Mittelwert für die jeweilige Bremswirkung der Wirbelstrombremse über eine vorgegebene Zeit ermittelt werden. Verbindet man alle Punkte im Kennfeld, die einen etwa gleichen spezifischen Kraftstoffverbrauch Be aufweisen, so erhält man, wie in Figur 2 dargestellt, muschelförmige Isolinien oder Höhenlinien, die diesem Kennfeld seinen Namen geben.

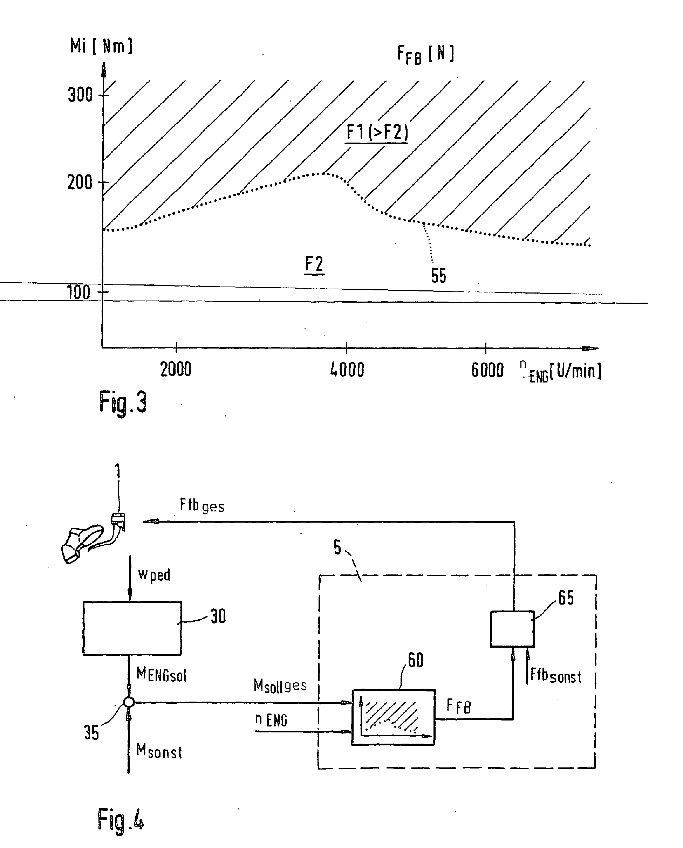

Für jede Motordrehzahl n_{ENG} gibt es genau einen minimalen spezifischen Kraftstoffverbrauch Be und damit genau einen optimalen Wirkungsgrad. In Figur 2 sind die Punkte mit dem minimalen spezifischen Kraftstoffverbrauch für verschiedene Motordrehzahlen n_{ENG} durch Dreiecke gekennzeichnet. Werden die Punkte mit dem minimalen spezifischen Kraftstoffverbrauch miteinander verbunden, so erhält man die in Figur 2 punktiert gezeichnete Linie, die mit dem Bezugszeichen 55 gekennzeichnet ist. Diese Linie 55 wird im Folgenden auch als Linie des minimalen spezifischen Kraftstoffverbrauchs bezeichnet. Figur 3 zeigt ein Kennfeld, in dem der Verlauf eines haptischen Signals F_{FB} in N und damit eine Rückstellkraft für das Fahrpedal 1 über der Motordrehzahl n_{ENG} in U/min auf der Abszisse und dem indizierten Motormoment Mi in Nm auf der Ordinate aufgetragen ist. Der Verlauf dieses haptischen Signals F_{FB} ergibt sich dabei aus der punktierten Linie 55 des minimalen spezifischen Kraftstoffverbrauchs gemäß Figur 2, in dem der Bereich oberhalb und unterhalb dieser Linie 55 durch unterschiedliche Werte der Rückstellkraft F_{FB} voneinander getrennt wird. Insbesondere können dies zwei verschiedene Werte sein, nämlich eine erste Rückstellkraft F1 oberhalb der Linie 55 des minimalen spezifischen Kraftstoffverbrauchs und eine zweite Rückstellkraft F2 unterhalb dieser Linie 55, wobei beispielsweise die erste Rückstellkraft F1 größer als die zweite Rückstellkraft F2 und die zweite Rückstellkraft F2 gleich Null sein kann. Damit kann dem Fahrer durch eine Erhöhung der Rückstellkraft F_{FB} am Fahrpedal 1 der optimale Betriebspunkt der Antriebseinheit und damit der optimale Motorwirkungsgrad signalisiert werden. Für den Fall, dass wie beschrieben, die erste Rückstellkraft F1 größer als die zweite Rückstellkraft F2 und die zweite Rückstellkraft F2 gleich Null ist, ergibt sich der optimale Wirkungsgrad des Motors für die Fahrpedalstellung, an der der Fahrer eine entsprechende Erhöhung des Widerstandes und damit der Rückstellkraft bei der Betätigung des Fahrpedals 1 spürt.

In Figur 4 ist ein Funktionsdiagramm zur Verdeutlichung der Funktionsweise der erfindungsgemäßen Vorrichtung 5 sowie des erfindungsgemäßen Verfahrens dargestellt. In Figur 4 kennzeichnen gleiche Bezugszeichen gleiche Elemente, wie in Figur 1. Dabei ist in Figur 4 im Unterschied zum Blockschaltbild nach Figur 1 zusätzlich der Aufbau der erfindungsgemäßen Vorrichtung 5 näher erläutert. Die Vorrichtung 5, die beispielsweise als Softwarestruktur auf einem Mikrochip implementiert sein kann, umfasst dabei eine Kennfeldfunktion 60, die das Muschelkennfeld aus Figur 2 umsetzt, und der als Eingangsgrößen das vom ersten Additionsglied 35 abgegebene resultierende Gesamtsollmoment Msollges sowie die aktuelle Motordrehzahl n_{ENG} als Eingangsgrößen zugeführt sind. Daraus ermittelt die Kennfeldfunktion 60 als Ausgangsgröße das haptische Signal F_{FB}, indem geprüft wird, ob der durch die aktuelle Motordrehzahl n_{ENG} und das resultierende Gesamtsollmoment Msollges gebildete Betriebspunkt oberhalb oder unterhalb der Linie 55 des minimalen spezifischen Kraftstoffverbrauchs liegt. Liegt der Betriebspunkt oberhalb der Linie 55, so ist F_{FB} gleich F1, andernfalls ist F_{FB} gleich F2. Das haptische Signal F_{FB} wird einem Maximalauswahlglied 65 zugeführt, dem außerdem vom Rückstellkraftkoordinator 50 die resultierende Rückstellkraftanforderung F_{fbsonst} der übrigen Rückstellkraftanforderungen zugeführt ist. Das Maximalauswahlglied 65 wählt aus den zugeführten Größen das Maximum aus und gibt es als resultierendes haptisches Signal Ffbges an das Fahrpedal 1 zur Einstellung der entsprechenden Rückstellkraft ab. Durch das Maximalauswahlglied 65 wird die Rückstellkraft am Fahrpedal 1 nach unten begrenzt, um sicher zu stellen, dass das Fahrpedal nach Loslassen wieder in seine Ausgangsstellung zurückkehrt.

Durch das erfindungsgemäße Verfahren und die erfindungsgemäße Vorrichtung 5 hat der Fahrer die Möglichkeit, aufgrund der haptischen Signalisierung am Fahrpedal 1 mit optimalem Wirkungsgrad des Motors zu fahren und zu beschleunigen. Darüber hinaus ist ein haptisches Signal am Fahrpedal 1 gegenüber einer optischen Anzeige dem Bewusstsein des Fahrers ständig präsent und wirkt nicht irritierend und vom Verkehr ablenkend.

## Patentansprüche

1. Verfahren zur Signalisierung einer für den Betrieb eines Kraftfahrzeugs relevanten Information, wobei diese Information durch einen Betriebspunkt einer Antriebseinheit des Fahrzeugs gebildet wird und dass in Abhängigkeit des Betriebspunktes eine haptische Signalisierung an einem Bedienelement (1) des Fahrzeugs, insbesondere einem Fahrpedal, gebildet wird, **dadurch gekennzeichnet, dass** durch die haptische Signalisierung ein optimaler Betriebspunkt der Antriebseinheit, insbesondere ein optimaler Motorwirkungsgrad, wiedergegeben wird und dass der optimale Betriebspunkt in Abhängigkeit einer von der Antriebseinheit abzugebenden Ausgangsgröße, insbesondere eines Sollmoments, und einer aktuellen Betriebsgröße der Antriebseinheit, insbesondere einer Motordrehzahl, bestimmt wird.

2. Verfahren nach Anspruch 1, **dadurch gekennzeichnet, dass** die von der Antriebseinheit abzugebende Ausgangsgröße in Abhängigkeit einer Stellung des Bedienelementes (1) ermittelt wird.

3. Verfahren nach einem der vorherigen Ansprüche, **dadurch gekennzeichnet, dass** die haptische Signalisierung etwa bei Erreichen des optimalen Betriebspunktes einsetzt.

4. Verfahren nach einem der vorherigen Ansprüche, **dadurch gekennzeichnet, dass** die haptische Signalisierung durch eine am Bedienelement (1) wirkende Rückstellkraft gebildet wird.

5. Vorrichtung (5) zur Signalisierung einer für den Betrieb des Fahrzeugs relevanten Information, wobei Mittel (20) zur Bildung dieser Information durch einen Betriebspunkt einer Antriebseinheit des Fahrzeugs vorgesehen sind und dass Mittel (10) vorgesehen sind, die in Abhängigkeit des Betriebspunktes eine haptische Signalisierung an einem Bedienelement (1) des Fahrzeugs, insbesondere einem Fahrpedal, bilden, **dadurch gekennzeichnet, dass** durch die haptische Signalisierung ein optimaler Betriebspunkt der Antriebseinheit, insbesondere ein optimaler Motorwirkungsgrad, wiedergegeben wird und dass Mittel (60) vorgesehen sind, die den optimalen Betriebspunkt in Abhängigkeit einer von der Antriebseinheit abzugebenden Ausgangsgröße, insbesondere eines Sollmoments, und einer aktuellen Betriebsgröße der Antriebseinheit, insbesondere einer Motordrehzahl, bestimmen.

## Claims

1. Method for signalling information which is relevant to the operation of a motor vehicle, this information being formed by an operating point of a drive unit of the vehicle and haptic signalling to an operator control element (1) of the vehicle, in particular an accelerator pedal, being formed as a function of the operating point, **characterized in that** an optimum operating point of the drive unit, in particular an optimum level of efficiency of the engine, is represented by the haptic signalling, and **in that** the optimum operating point is determined as a function of an output variable which is to be emitted by the drive unit, in particular a setpoint torque, and a current operating variable of the drive unit, in particular an engine speed.

2. Method according to Claim 1, **characterized in that** the output variable to be emitted by the drive unit is determined as a function of a position of the operator control element (1).

3. Method according to one of the preceding claims, **characterized in that** the haptic signalling starts, for example, when the optimum operating point is reached.

4. Method according to one of the preceding claims, **characterized in that** the haptic signalling is formed by a restoring force which acts on the operator control element (1).

5. Device (5) for signalling information which is relevant to the operation of the vehicle, means (20) for forming this information being provided by an operating point of a drive unit of the vehicle, and means (10) being provided which form haptic signalling to an operator control element (1) of the vehicle, in particular an accelerator pedal, as a function of the operating point, **characterized in that** an optimum operating point of the drive unit, in particular an optimum level of efficiency of the engine, is represented by the haptic signalling, and **in that** means (60) are provided which determine the optimum operating point as a function of an output variable which is to be emitted by the drive unit, in particular a setpoint torque, and a current operating variable of the drive unit, in particular an engine speed.

## Revendications

1. Procédé pour signaler une information déterminante pour le fonctionnement d'un véhicule automobile,
cette informations étant formée par un point de fonctionnement d'une unité d'entraînement du véhicule et
selon le point de fonctionnement, on forme une signalisation haptique pour un élément de manoeuvre (1) du véhicule, notamment la pédale d'accélérateur,
**caractérisé en ce que**
la signalisation haptique reproduit un point de fonctionnement optimum de l'unité d'entraînement, notamment un rendement optimum du moteur, et
le point de fonctionnement optimum est défini en fonction d'une grandeur de sortie que doit fournir l'unité d'entraînement, notamment un couple de consigne et une grandeur de fonctionnement actuelle de l'unité d'entraînement, notamment une vitesse de rotation de moteur.

2. Procédé selon la revendication 1,
**caractérisé en ce que**
la grandeur de sortie à fournir par l'unité d'entraînement se détermine en fonction d'une position de l'élément de manoeuvre (1).

3. Procédé selon l'une des revendications précédentes,
**caractérisé en ce que**
la signalisation haptique se met en oeuvre sensiblement lorsqu'on atteint le point de fonctionnement optimum.

4. Procédé selon l'une des revendications précédentes,
**caractérisé en ce que**
la signalisation haptique est formée par une force de rappel agissant sur l'élément de manoeuvre (1).

5. Dispositif (5) pour signaler une information concernant le fonctionnement du véhicule, des moyens (20) étant prévus pour former cette information par un point de fonctionnement d'une unité d'entraînement du véhicule et
des moyens (10) étant prévus qui, selon un point de fonctionnement, forment une signalisation haptique d'un élément de manoeuvre (1) du véhicule, notamment une pédale d'accélérateur,
**caractérisé en ce que**
la signalisation haptique reproduit un point de fonctionnement optimum de l'unité d'entraînement, notamment un rendement optimum du moteur et
des moyens (60) sont prévus pour déterminer le point de fonctionnement optimum selon une grandeur de sortie que doit fournir l'unité d'entrainement, notamment un couple de consigne et d'une grandeur de fonctionnement actuelle de l'unité d'entraînement, notamment la vitesse de rotation du moteur.
